# EUROPEAN PATENT APPLICATION

(11) **EP 4 012 576 A1**
(43) Date of publication of application: **15.06.2022**
(21) Application number: 21827167.4
(22) Date of filing: 02.06.2021
(51) Int. Cl.: G06F 16/332

(54) **METHOD AND APPARATUS FOR GENERATING BROADCAST VOICE, AND DEVICE AND COMPUTER STORAGE MEDIUM**

(30) Priority: 15.10.2020 CN 202011105935
(71) Applicant: Beijing Baidu Netcom Science and Technology Co., Ltd, Beijing 100085 (CN)
(72) Inventor: DING, Shiqiang, Beijing 100085 (CN); HUANG, Jizhou, Beijing 100085 (CN); WU, Di, Beijing 100085 (CN)
(74) Representative: dompatent von Kreisler Selting Werner - Partnerschaft von Patent- und Rechtsanwälten mbB
(86) International application number: PCT/CN2021/097840
(87) International publication number: WO 2022/077927

(57) **Abstract**

The present application discloses a method and apparatus for generating a broadcast speech, a device and a computer storage medium, and relates to the fields of voice technologies and knowledge graph technologies. A technical solution includes: acquiring script matched with a scenario from a speech package, and acquiring a broadcast template configured for the scenario in advance; and filling the broadcast template with the script to generate the broadcast speech. In the present application, the broadcast speech may well reflect a personality characteristic of an entity object of the speech package, such that a broadcast effect is improved greatly.

## Description

This application claims priority to Chinese Patent Application No.202011105935.8, filed on October 15, 2020, entitled "Method and Apparatus for Generating Broadcast Speech, Device and Computer Storage Medium".

### TECHNICAL FIELD

The present application relates to the field of computer application technologies, particularly to a speech technology and a knowledge graph technology, and more particularly to a method and apparatus for generating a broadcast speech, a device and a computer storage medium.

### BACKGROUND

With a continuous improvement of requirements of users for intelligent terminal functions, a speech broadcast function is integrated in more and more applications. The user may download and install various speech packages, such that a preferred person's voice may be used during a speech broadcast.

Currently, although the speech broadcast meets the requirement of the user for the voice to a great extent, an effect is unsatisfactory due to fixed content of the speech broadcast under varies scenarios. For example, at the beginning of navigation, "start to go" is announced regardless of the speech package used by the user.

### SUMMARY

In view of this, the present application provides a method and apparatus for generating a broadcast speech, a device and a computer storage medium, so as to improve an effect of a speech broadcast.

In a first aspect, the present application provides a method for generating a broadcast speech, including:
acquiring a script matched with a scenario from a speech package, and acquiring a broadcast template configured for the scenario in advance; and
filling the broadcast template with the script to generate the broadcast speech.

In a second aspect, the present application provides an apparatus for generating a broadcast speech, including:
a script acquiring module configured to acquire a script matched with a scenario from a speech package;
a template acquiring module configured to acquire a broadcast template configured for the scenario in advance; and
a speech generating module configured to fill the broadcast template with the script to generate the broadcast speech.

In a third aspect, the present application provides an electronic device, including:
at least one processor; and
a memory connected with the at least one processor communicatively;
where the memory stores instructions executable by the at least one processor to enable the at least one processor to perform the above-mentioned method.

In a fourth aspect, the present application provides a non-transitory computer readable storage medium storing computer instructions, which, when executed by a computer, cause the computer to perform the above-mentioned method.

From the above technical solution, in the present application, the broadcast template is filled with the script matched with the scenario in the speech package to obtain the broadcast speech, such that a personality characteristic of an entity object of the speech package may be well reflected by the broadcast speech, a broadcast effect is improved greatly, and a user has a real sense of listening to the entity object of the speech package.

Other effects of the above-mentioned alternatives will be described below in conjunction with embodiments.

### BRIEF DESCRIPTION OF THE DRAWINGS

The drawings are used for better understanding the present solution and do not constitute a limitation of the present application. In the drawings,
Fig. 1 is a schematic diagram of a principle of generating a broadcast speech in prior art;
Fig. 2 shows an exemplary system architecture to which embodiments of the present application may be applied;
Fig. 3 is a flow chart of a main method according to an embodiment of the present application;
Fig. 4 is a schematic diagram of a principle of generating a broadcast speech according to an embodiment of the present application;
Fig. 5 is a flow chart of a method for mining a style script according to an embodiment of the present application;
Fig. 6 is a flow chart of a method for mining a knowledge script according to an embodiment of the present application;
Fig. 7 is a diagram of an instance of a partial knowledge graph according to an embodiment of the present application;
Fig. 8 is a structural diagram of an apparatus for generating a broadcast speech according to an embodiment of the present application; and
Fig. 9 is a block diagram of an electronic device configured to implement the embodiment of the present application.

### DETAILED DESCRIPTION OF EMBODIMENTS

The following part will illustrate exemplary embodiments of the present application with reference to the drawings, including various details of the embodiments of the present application for a better understanding. The embodiments should be regarded only as exemplary ones. Therefore, those skilled in the art should appreciate that various changes or modifications can be made with respect to the embodiments described herein without departing from the scope and spirit of the present application. Similarly, for clarity and conciseness, the descriptions of the known functions and structures are omitted in the descriptions below.

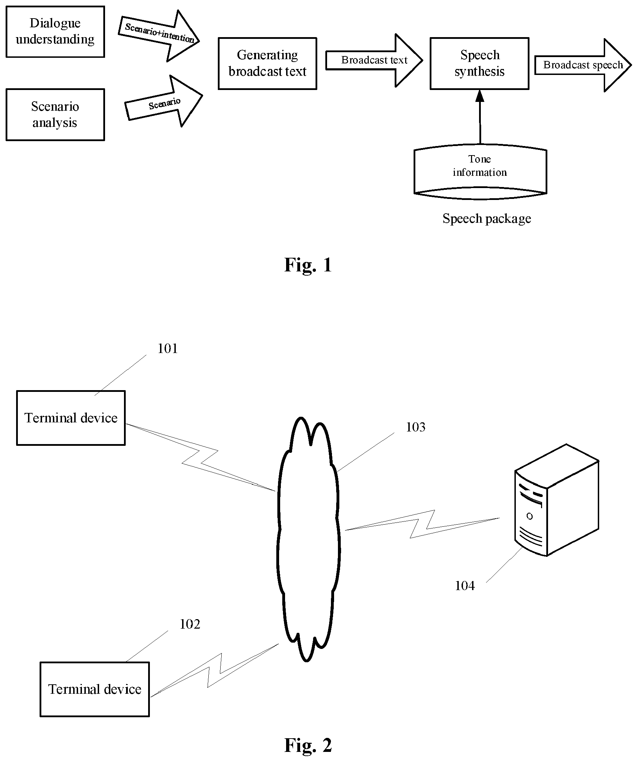

In prior art, a principle of generating a broadcast speech may be as shown in Fig. 1. Generation of a broadcast text may include, but is not limited to, two cases:
One is dialogue-based broadcast text generation. That is, after receipt of a user voice instruction, a reply text generated in response to the user voice instruction is used as the broadcast text. For example, the user voice instruction "inquire coffee shop" is received, and the generated reply text is "find nearest coffee shop for you, located at floor C, Beijing International building, Zhongguancun South Avenue, 2.1 km from you". In this case, the reply text is generated by analyzing a scenario and a user intention mainly based on dialogue understanding.

The other is active broadcast text generation. That is, in a voice broadcast process of a certain function, a voice broadcast is performed actively. For example, in a navigation process, broadcast texts, such as "start to go", "turn left ahead", or the like, are broadcast actively. In this case, the broadcast text is generated by analyzing scenario mainly based on a current actual situation.

After generation of the broadcast text, speech synthesis is performed using tone information in a speech package to obtain the speech to be broadcast. In the prior art, under the same scenario, the broadcast speeches generated and broadcast by different speech packages have same content, and only tone differences exist. For example, under the scenario "inquire coffee shop", when a user uses a speech package of his son and a speech package of a star, "find nearest coffee shop, located at ^{∗∗∗}" is broadcast.

Fig. 2 shows an exemplary system architecture to which a method or apparatus for generating a broadcast speech according to embodiments of the present application may be applied.

As shown in Fig. 2, the system architecture may include terminal devices 101, 102, a network 103 and a server 104. The network 103 serves as a medium for providing communication links between the terminal devices 101, 102 and the server 104. The network 103 may include various connection types, such as wired and wireless communication links, or fiber-optic cables, or the like.

Users may use the terminal devices 101, 102 to interact with the server 104 through the network 103. Various applications, such as a voice interaction application, a map application, a web browser application, a communication application, or the like, may be installed on the terminal devices 101, 102.

The terminal devices 101, 102 may be configured as various electronic devices which support the speech broadcast, including, but not limited to, smart phones, tablets, notebook computers, smart wearable devices, or the like. The apparatus for generating a broadcast speech according to the present application may be provided and run in the above-mentioned server 104, or the terminal devices 101, 102. The apparatus may be implemented as a plurality of pieces of software or software modules (for example, for providing distributed service), or a single piece of software or software module, which is not limited specifically herein.

The server 104 may be configured as a single server or a server group including a plurality of servers. It should be understood that the numbers of the terminal devices, the network, and the server in Fig. 2 are merely schematic. There may be any number of terminal devices, networks and servers as desired for an implementation.

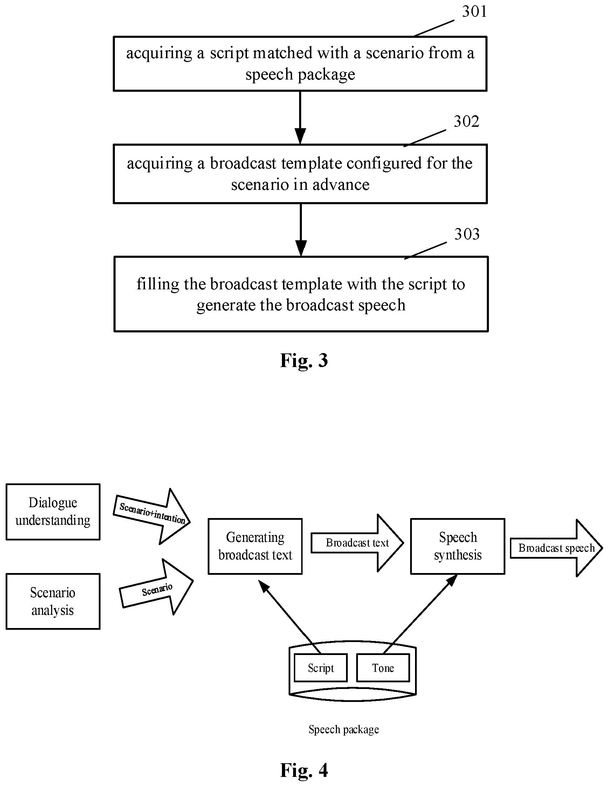

Fig. 3 is a flow chart of a main method according to the embodiment of the present application, and as shown in Fig. 3, the method may include the following steps:
301: acquiring script matched with a scenario from a speech package.

In the embodiment of the present application, the speech package may include various scripts in addition to the tone information. The term "script" could be understood as an utterance/expression way, for example, a same meaning may be expressed in different ways, or with different scripts. In the embodiment of the present application, different scripts may be used in different speech packages for a same scenario. The scripts includes at least one kind of: an address script, a style script, a knowledge script, or the like. The address script is an expression of an address of the user (address form). The style script is an expression having a particular style. The knowledge script is an expression based on particular knowledge content.

As an example of the address script, the address script "dad" may be used when the user uses a speech package of his son. The address script "husband" may be used when the user uses a speech package of his wife. Certainly, the address script may not be present in the speech package. For example, for a speech package of a star, basic script, such as "you", may be used instead of the address script.

As an example of the style script, for the same scenario "overspeed", when the user uses the speech package of his family member, a heartwarming style is reflected, and the style script "overspeed, drive carefully and safely" may be used. When the user uses a speech package of a comic star, a funny style is reflected, and the style script "we are ordinary drivers, do not always pretend to drive F1 cars, slow down" may be used.

As an example of the knowledge script, for the scenario "coffee shop", when the user uses a speech package of star A, the knowledge script "a cup of xxx coffee" may be used, and "xxx" may be a brand of coffee endorsed by star A. When the user uses a speech package of star B, "xxx" in the knowledge script may be a brand of coffee endorsed by star B.

A generation way of the script in the speech package will be described in detail in the following embodiments.

302: acquiring a broadcast template configured for the scenario in advance.

In the embodiment of the present application, a broadcast template may be configured for each scenario in advance. The broadcast template may include one kind of script or a combination of two or more kinds of scripts.

303: filling the broadcast template with the acquired script to generate the broadcast speech.

The broadcast template corresponds to the scenario, the speech package has personalized script matched with the scenario, and the broadcast text obtained after the broadcast template is filled with the script may well reflect a personality characteristic corresponding to an entity object (for example, a son, a wife, a celebrity, or the like) of the speech package, such that a broadcast effect is improved greatly, and the user has a real sense of listening to the entity object of the speech package.

After the broadcast text is obtained, the tone information in the speech package may be further utilized to perform speech synthesis, so as to finally generate the broadcast speech, which is the same as in the prior art and not detailed.

As shown in Fig. 4, in the present application, the script in the speech package is utilized in the process of generating the broadcast text. The way of generating the script in the speech package will be described below in detail in conjunction with embodiments.

The address script in the speech package may be set by the user. As a preferred implementation, a component, such as an input box, an option, or the like, for the address script may be provided for the user in a setup interface for the speech package, such that the user may input or select the address script. For example, the user using the speech package of his son may be provided with a setup interface for the speech package, and the setup interface includes options of common addresses, such as "dad", "mom", "grandpa", "husband", "wife", "grandma", "baby", or the like, for the user to select. An input box may also be provided for the user to input the information.

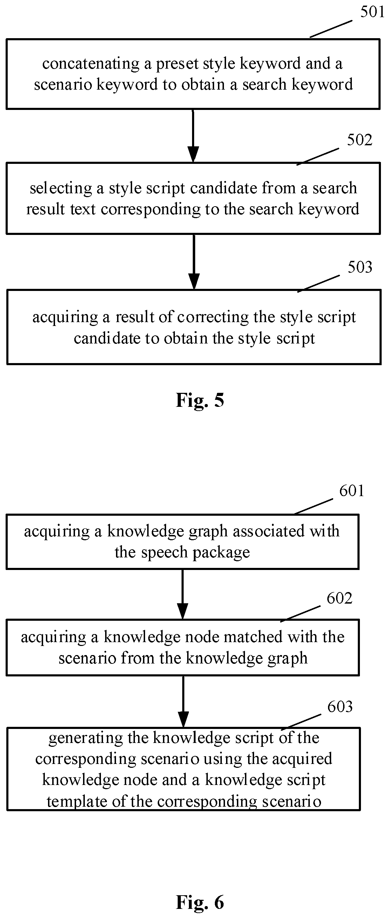

For the style script in the speech package, preset content may be obtained; for example, the content is preset by a developer, a service provider, or the like. But as a preferred implementation, the style script may be mined in advance by a search engine. For example, the steps shown in Fig. 5 may be adopted:
501: concatenating a preset style keyword and a scenario keyword to obtain a search keyword.

The style keyword may also be set by the user. For example, a component, such as an input box or an option, for the style keyword may be provided for the user in the setup interface for the speech package, such that the user may input or select the keyword. For example, options for the style keyword, such as "intimate", "funny", "overbearing", "Tik Tok style", or the like, may be provided in the setup interface of the speech package for the user to select.

502: selecting a style script candidate from a search result text corresponding to the search keyword.

Assuming that the current scenario is a query of a coffee shop, the scenario keywords are "coffee shop" and "coffee", the style keyword of the speech package currently used by the user is "heartwarming", the keywords "coffee shop heartwarming" and "coffee heartwarming" may be built, and after searches, search result texts, such as a title and an abstract of a search result, or the like, may be obtained. After the search result texts are ranked based on relevance to the search keyword, the top N search result texts are selected as the style script candidates. N is a preset positive integer.

503: correcting the style script candidate to obtain the style script.

In the present embodiment, the above-mentioned correction of the style script candidate may mean that a developer may perform a processing operation, such as adjustment, combination, selection, or the like, on the style script candidate to obtain the final style script. An address slot may also be added in the style script. In addition to manual correction, other correction methods may also be adopted.

For example, the style script candidates are "coffee may refresh me, if want to have a good sleep, give it up first", "sip coffee, although a bit bitter, later sweetness would make you forget bitterness", and "life is like a cup of coffee, bitter but sweet, sweet and joyful". After manual correction, the style script "drinking coffee may refresh you, but influence sleep, [address], rest more" may be obtained.

For the knowledge script in the speech package, preset content may be obtained; for example, the content is preset by a developer, a service provider, or the like. But as a preferred implementation, the knowledge script may be mined in advance based on a knowledge graph. For example, the steps shown in Fig. 6 may be adopted:
601: acquiring a knowledge graph associated with a speech package.

Usually, the speech package corresponds to a certain entity object, and reflects a tone of the entity object. For example, when the user uses a speech package of a family member, an entity corresponding to the speech package is the family member. For another example, when the user uses a speech package of star A, the entity corresponding to the speech package is star A. Each entity has its corresponding knowledge graph, such that the knowledge graph of the entity corresponding to the speech package may be obtained in this step.

602: acquiring a knowledge node matched with the scenario from the knowledge graph.

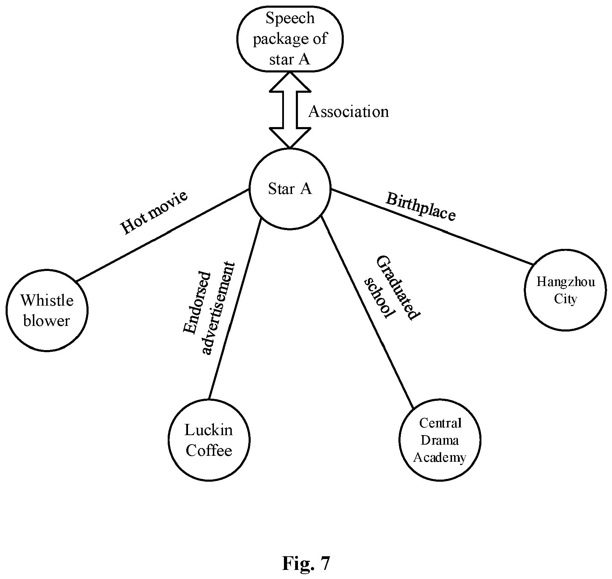

In the knowledge graph, each knowledge node contains specific content and association relationships with other knowledge nodes. The partial content of the knowledge graph shown in Fig. 7 is taken as an example. Taking the speech package of "star A" as an example, the corresponding entity is "star A", and the knowledge graph may include knowledge nodes, such as "Whistleblower", "Luckin Coffee", "Central Drama Academy", "Hangzhou City", or the like; the association relationship between "Whistleblower" and "star A" is "hot movie", the association relationship between "Luckin Coffee" and "star A" is "advertising endorsement", the association relationship between "Central Drama Academy" and "star A" is "graduated school", and the association relationship between "Hangzhou City" and "star A" is "birthplace". When the knowledge node matched with the scenario is obtained, the scenario keyword may be matched with the content and the association relationship of the knowledge node.

603: generating the knowledge script of the corresponding scenario using the acquired knowledge node and a script template of the corresponding scenario.

For each scenario, the script template for the knowledge script may be preset. For example, for the scenario "inquire cinema", the script template "come to the cinema and see my new movie [title]" may be set, and after the knowledge node "Whistleblower" is determined in step 602, the slot [title] in the script template is filled with the knowledge node, thereby generating the knowledge script "come to the cinema and see my new movie <Whistleblower>".

The speech package may have part or all of the address script, the style script and the knowledge script. As a preferred implementation, in the above-mentioned step 301 of "acquiring the script matched with the scenario from a speech package", the scenario keyword may be determined first, and then, the script matched with the scenario keyword may be obtained from the speech package. The matching process may be performed based on a text similarity; for example, when the text similarity between the script and the scenario keyword is greater than or equal to a preset similarity threshold, the script is considered to be matched with the scenario. In this way, more comprehensive script close to the scenario may be found.

Other implementations than the above-mentioned exemplary implementations may also be adopted. For example, a matching relationship between the script and each scenario is preset.

In the following, implementations of the above-mentioned step 302 of "acquiring a broadcast template configured for the scenario in advance" and step 303 of "filling the broadcast template with the acquired script to generate the broadcast speech" are described with reference to the embodiments.

At least one broadcast template and attribute information of each broadcast template may be configured in advance for each scenario. The broadcast template includes one kinds of script or a combination of two or more kinds of scripts, and may include basic script in addition to the address script, the style script and the knowledge script described above, and the basic script may be stored in the server side. The attribute information may include at least one of a priority, a constraint rule between script, or the like.

As an example, it is assumed that six broadcast templates are set for the theme "inquire coffee shop", and the priorities and constraint rules thereof are shown in table 1.

**Table 1**

| Broadcast template | Priority | Constraint rule |
|---|---|---|
| [Address] [Knowledge script] | 10 | No address exist in the knowledge script |
| [Knowledge script] | 9 | None |
| [Address] [Basic script] [Style script] | 7 | No address exist in the style script |
| [Basic script] [Style script] | 5 | None |
| [Address] [Basic script] | 2 | None |
| [Basic script] | 0 | None |

Assuming that the user uses the speech package of his son, in the scenario "inquire coffee shop", the following script matched with the scenario in the speech package is obtained:
address script: dad;
style script: drinking coffee may refresh you, but influence sleep, [address], rest more.

The broadcast templates shown in table 1 are screened in a descending order of the priority. Since there is no knowledge script matched with the scenario, the first two templates are not adopted. Since the third template has a constraint rule that no address exist in the style script, the third template may not be adopted, and the fourth template "[Basic script] [Style script]" may be used.

The basic script "find nearest coffee shop, located at ^{∗∗∗}" of the scenario is obtained from the server side, and the style script "drinking coffee may refresh you, but influence sleep, [address], rest more" of the scenario is obtained from the speech package, so as to fill the fourth template to finally obtain the broadcast text "find nearest coffee shop, located at ^{∗∗∗}, drinking coffee may refresh you, but influence sleep, dad, rest more".

After the broadcast text is obtained, speech synthesis may be performed based on the tone information in the speech package, so as to obtain the broadcast speech. With the generation method of the broadcast speech, the user hears a voice as if it is spoken by his son, which is heartwarming, and a high personalized effect is achieved.

The method according to the present application is described above in detail, and the apparatus according to the present application will be described below in detail.

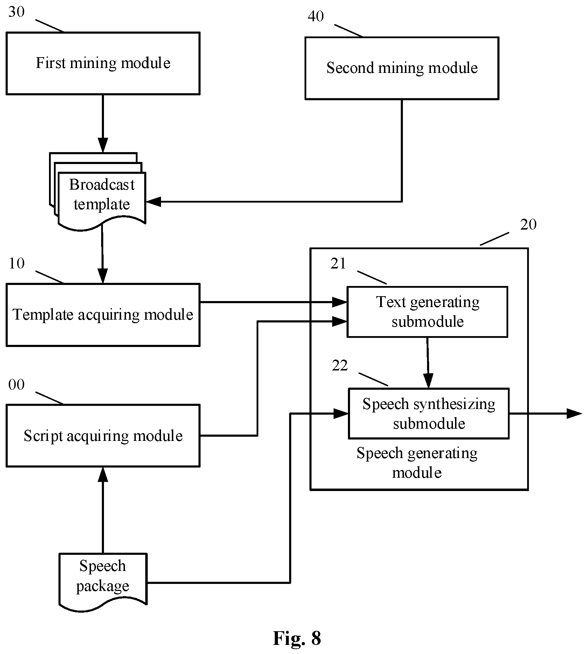

Fig. 8 is a structural diagram of an apparatus for generating a broadcast speech according to an embodiment of the present application; the apparatus may be configured as an application located at a local terminal, or a functional unit, such as a plug-in or software development kit (SDK) located in the application of the local terminal, or the like, or be located at a server. As shown in Fig. 8, the apparatus may include a script acquiring module 00, a template acquiring module 10 and a speech generating module 20, and may further include a first mining module 30 and a second mining module 40. The main functions of each constitutional unit are as follows.

The script acquiring module 00 is configured to acquire script matched with a scenario from a speech package.

As a preferred implementation, the script acquiring module 00 may determine a scenario keyword, and obtain the script matched with the scenario keyword from the speech package.

The script includes at least one kind of: an address script, a style script and a knowledge script.

The template acquiring module 10 is configured to acquire a broadcast template configured for the scenario in advance.

As a preferred implementation, the template acquiring module 10 may determine at least one broadcast template and attribute information of each of the at least one broadcast template configured in advance for the scenario, the broadcast template including one kind of script or a combination of two or more kinds of scripts; select one broadcast template configured for the scenario from the at least one broadcast template according to the attribute information of each of the at least one broadcast template and the speech package.

The speech generating module 20 is configured to fill the broadcast template with script to generate the broadcast speech.

Specifically, the speech generating module 20 may include a text generating submodule 21 and a speech synthesizing submodule 22.

The text generating submodule 21 is configured to fill the broadcast template with the script to generate a broadcast text.

The speech synthesizing submodule 22 is configured to perform speech synthesis on the broadcast text using tone information in the speech package to obtain the broadcast speech.

The address script in the speech package may be set by the user. As an exemplary implementation, a component, such as an input box, an option, or the like, for the address script may be provided for the user in a setup interface for the speech package, such that the user may input or select the address script.

For the style script in the speech package, preset content may be obtained; for example, the content is preset by a developer, a service provider, or the like. But as a preferred implementation, the style script may be mined in advance by the first mining module 30 by means of a search engine.

The first mining module 30 is configured to mine the style script in the speech package in advance by:
concatenating a preset style keyword and a scenario keyword to obtain a search keyword;
selecting a style script candidate from a search result text corresponding to the search keyword; and
acquiring a result of correcting the style script candidate to obtain the style script. As one implementation, the style script candidate may be corrected manually.

The second mining module 40 is configured to mine the knowledge script in the speech package in advance by:
acquiring a knowledge graph associated with the speech package;
acquiring a knowledge node matched with the scenario from the knowledge graph; and
generating the knowledge script of the corresponding scenario using the acquired knowledge node and a knowledge script template of the corresponding scenario.

According to the embodiment of the present application, there are also provided an electronic device and a readable storage medium.

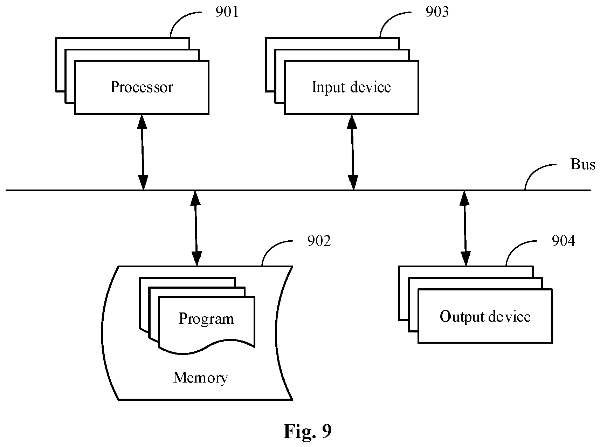

Fig. 9 is a block diagram of an electronic device for the method for generating a broadcast speech according to some embodiments of the present application. The electronic device is intended to represent various forms of digital computers, such as laptop computers, desktop computers, workstations, personal digital assistants, servers, blade servers, mainframe computers, and other appropriate computers. The electronic device may also represent various forms of mobile devices, such as personal digital processors, cellular telephones, smart phones, wearable devices, and other similar computing devices. The components shown herein, their connections and relationships, and their functions, are meant to be exemplary only, and are not meant to limit implementation of the present application described and/or claimed herein.

As shown in Fig. 9, the electronic device includes one or more processors 901, a memory 902, and interfaces configured to connect the components, including high-speed interfaces and low-speed interfaces. The components are interconnected using different buses and may be mounted at a common motherboard or in other manners as desired. The processor may process instructions for execution within the electronic device, including instructions stored in or at the memory to display graphical information for a GUI at an external input/output device, such as a display device coupled to the interface. In other implementations, plural processors and/or plural buses may be used with plural memories, if desired. Also, plural electronic devices may be connected, with each device providing some of necessary operations (for example, as a server array, a group of blade servers, or a multi-processor system). In Fig. 9, one processor 901 is taken as an example.

The memory 902 is configured as the non-transitory computer readable storage medium according to the present application. The memory stores instructions executable by the at least one processor to cause the at least one processor to perform a method for generating a broadcast speech according to the present application. The non-transitory computer readable storage medium according to the present application stores computer instructions for causing a computer to perform the method for generating a broadcast speech according to the present application.

The memory 902 which is a non-transitory computer readable storage medium may be configured to store non-transitory software programs, non-transitory computer executable programs and modules, such as program instructions/modules corresponding to the method for generating a broadcast speech according to the embodiment of the present application. The processor 901 executes various functional applications and data processing of a server, that is, implements the method for generating a broadcast speech according to the above-mentioned embodiment, by running the non-transitory software programs, instructions, and modules stored in the memory 902.

The memory 902 may include a program storage area and a data storage area, where the program storage area may store an operating system and an application program required for at least one function; the data storage area may store data created according to use of the electronic device, or the like. Furthermore, the memory 902 may include a high-speed random access memory, or a non-transitory memory, such as at least one magnetic disk storage device, a flash memory device, or other non-transitory solid state storage devices. In some embodiments, optionally, the memory 902 may include memories remote from the processor 901, and such remote memories may be connected to the electronic device via a network. Examples of such a network include, but are not limited to, the Internet, intranets, local area networks, mobile communication networks, and combinations thereof.

The electronic device may further include an input device 903 and an output device 904. The processor 901, the memory 902, the input device 903 and the output device 904 may be connected by a bus or other means, and Fig. 9 takes the connection by a bus as an example.

The input device 903 may receive input numeric or character information and generate key signal input related to user settings and function control of the electronic device, such as a touch screen, a keypad, a mouse, a track pad, a touch pad, a pointing stick, one or more mouse buttons, a trackball, a joystick, or the like. The output device 904 may include a display device, an auxiliary lighting device (for example, an LED) and a tactile feedback device (for example, a vibrating motor), or the like. The display device may include, but is not limited to, a liquid crystal display (LCD), a light emitting diode (LED) display, and a plasma display. In some implementations, the display device may be a touch screen.

Various implementations of the systems and technologies described here may be implemented in digital electronic circuitry, integrated circuitry, application specific integrated circuits (ASIC), computer hardware, firmware, software, and/or combinations thereof. The systems and technologies may be implemented in one or more computer programs which are executable and/or interpretable on a programmable system including at least one programmable processor, and the programmable processor may be special or general, and may receive data and instructions from, and transmit data and instructions to, a storage system, at least one input device, and at least one output device.

These computer programs (also known as programs, software, software applications, or codes) include machine instructions for a programmable processor, and may be implemented using high-level procedural and/or object-oriented programming languages, and/or assembly/machine languages. As used herein, the terms "machine readable medium" and "computer readable medium" refer to any computer program product, device and/or apparatus (for example, magnetic discs, optical disks, memories, programmable logic devices (PLD)) for providing machine instructions and/or data for a programmable processor, including a machine readable medium which receives machine instructions as a machine readable signal. The term "machine readable signal" refers to any signal for providing machine instructions and/or data for a programmable processor.

To provide interaction with a user, the systems and technologies described here may be implemented on a computer having: a display device (for example, a cathode ray tube (CRT) or liquid crystal display (LCD) monitor) for displaying information to a user; and a keyboard and a pointing device (for example, a mouse or a trackball) by which a user may provide input for the computer. Other kinds of devices may also be used to provide interaction with a user; for example, feedback provided for a user may be any form of sensory feedback (for example, visual feedback, auditory feedback, or tactile feedback); and input from a user may be received in any form (including acoustic, speech or tactile input).

The systems and technologies described here may be implemented in a computing system (for example, as a data server) which includes a back-end component, or a computing system (for example, an application server) which includes a middleware component, or a computing system (for example, a user computer having a graphical user interface or a web browser through which a user may interact with an implementation of the systems and technologies described here) which includes a front-end component, or a computing system which includes any combination of such back-end, middleware, or front-end components. The components of the system may be interconnected through any form or medium of digital data communication (for example, a communication network). Examples of the communication network include: a local area network (LAN), a wide area network (WAN) and the Internet.

A computer system may include a client and a server. Generally, the client and the server are remote from each other and interact through the communication network. The relationship between the client and the server is generated by virtue of computer programs which run on respective computers and have a client-server relationship to each other.

It should be understood that various forms of the flows shown above may be used and reordered, and steps may be added or deleted. For example, the steps described in the present application may be executed in parallel, sequentially, or in different orders, which is not limited herein as long as the desired results of the technical solution disclosed in the present application may be achieved.

The above-mentioned implementations are not intended to limit the scope of the present application. It should be understood by those skilled in the art that various modifications, combinations, sub-combinations and substitutions may be made, depending on design requirements and other factors. Any modification, equivalent substitution and improvement made within the spirit and principle of the present application all should be included in the extent of protection of the present application.

## Claims

1. A method for generating a broadcast speech, comprising:
acquiring a script matched with a scenario from a speech package, and acquiring a broadcast template configured for the scenario in advance; and
filling the broadcast template with the script to generate the broadcast speech.

2. The method according to claim 1, wherein the script comprises at least one kind of: an address script, a style script or a knowledge script.

3. The method according to claim 1, wherein acquiring the script matched with the scenario from the speech package comprises:
determining a keyword of the scenario; and
acquiring the script matched with the keyword of the scenario from the speech package.

4. The method according to claim 1, wherein acquiring the broadcast template configured for the scenario in advance comprises:
determining at least one broadcast template and attribute information of each of the at least one broadcast template configured in advance for the scenario, the broadcast template comprising one kind of script or a combination of two or more kinds of scripts; and
selecting one broadcast template configured for the scenario from the at least one broadcast template according to the attribute information of each of the at least one broadcast template and the speech package.

5. The method according to claim 1, wherein filling the broadcast template with the script to generate the broadcast speech comprises:
filling the broadcast template with the script to generate a broadcast text; and
performing speech synthesis on the broadcast text using tone information in the speech package to obtain the broadcast speech.

6. The method according to claim 2, wherein the style script in the speech package is mined in advance by:
concatenating a preset style keyword and a scenario keyword to obtain a search keyword;
selecting a style script candidate from a search result text corresponding to the search keyword; and
acquiring a result of correcting the style script candidate to obtain the style script.

7. The method according to claim 2, wherein the knowledge script in the speech package is mined in advance by:
acquiring a knowledge graph associated with the speech package;
acquiring a knowledge node matched with the scenario from the knowledge graph; and
generating the knowledge script of the corresponding scenario using the acquired knowledge node and a knowledge script template of the corresponding scenario.

8. An apparatus for generating a broadcast speech, comprising:
a script acquiring module configured to acquire a script matched with a scenario from a speech package;
a template acquiring module configured to acquire a broadcast template configured for the scenario in advance; and
a speech generating module configured to fill the broadcast template with the script to generate the broadcast speech.

9. The apparatus according to claim 8, wherein the script comprises at least one kind of: an address script, a style script or a knowledge script.

10. The apparatus according to claim 8, wherein the script acquiring module is specifically configured to determine a keyword of the scenario, and acquire the script matched with the keyword of the scenario from the speech package.

11. The apparatus according to claim 8, wherein the template acquiring module is specifically configured to determine at least one broadcast template and attribute information of each of the at least one broadcast template configured in advance for the scenario, the broadcast template comprising one kind of script or a combination of two or more kinds of scripts; select one broadcast template configured for the scenario from the at least one broadcast template according to the attribute information of each of the at least one broadcast template and the speech package.

12. The apparatus according to claim 11, wherein the speech generating module comprises:
a text generating submodule configured to fill the broadcast template with the script to generate a broadcast text; and
a speech synthesizing submodule configured to perform speech synthesis on the broadcast text using tone information in the speech package to obtain the broadcast speech.

13. The apparatus according to claim 9, further comprising: a first mining module configured to mine the style script in the speech package in advance by:
concatenating a preset style keyword and a scenario keyword to obtain a search keyword;
selecting a style script candidate from a search result text corresponding to the search keyword; and
acquiring a result of correcting the style script candidate to obtain the style script.

14. The apparatus according to claim 9, further comprising: a second mining module configured to mine the knowledge script in the speech package in advance by:
acquiring a knowledge graph associated with the speech package;
acquiring a knowledge node matched with the scenario from the knowledge graph; and
generating the knowledge script of the corresponding scenario using the acquired knowledge node and a knowledge script template of the corresponding scenario.

15. An electronic device, comprising:
at least one processor; and
a memory connected with the at least one processor communicatively;
wherein the memory stores instructions executable by the at least one processor to cause the at least one processor to perform the method according to any one of claims 1 to 7.

16. A non-transitory computer readable storage medium storing computer instructions, which, when executed by a computer, cause the computer to perform the method according to any one of claims 1 to 7.
